# EUROPEAN PATENT APPLICATION

(11) **EP 0 652 168 A1**
(43) Date of publication of application: **10.05.1995**
(21) Application number: 94117608.3
(22) Date of filing: 08.11.1994
(51) Int. Cl.: B65G 15/08, B65G 15/60

(54) **Return pipe conveyer**

(30) Priority: 09.11.1993 JP 279387/93
(71) Applicant: BRIDGESTONE CORPORATION, Tokyo 104 (JP)
(72) Inventor: Kuroda, Kimihide, Kitakyushu-shi, Fukuoka (JP)
(74) Representative: Görg, Klaus, Dipl.-Ing.

(57) **Abstract**

A return pipe conveyer including an endless conveyer belt (1) supported between opposing rollers, support rollers (5) for supporting the belt and an object (8) to be conveyed during a conveying trip (1a) of the belt, shape supporting rollers (6) for rounding the belt (1) into a substantially pipe-shaped cross section during a return trip (19) of the belt (1) and pressing units (11) for pressing opposite lateral edges of the belt against the supporting rollers (5) to suppress warping of the belt caused by the shape supporting rollers (6) during the return trip (16), thereby ensuring smooth and stable movement of the belt during the conveying trip.

## Description

### BACKGROUND OF THE INVENTION

The present invention relates to a return pipe conveyer having an endless conveyer belt which is conveyed in a flat, guided manner for the conveying trip, and in a rounded, pipe-like shape for at least a middle part of the return trip.

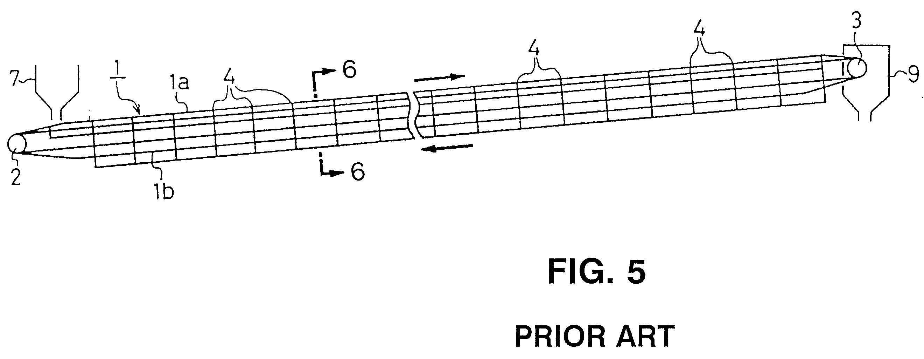

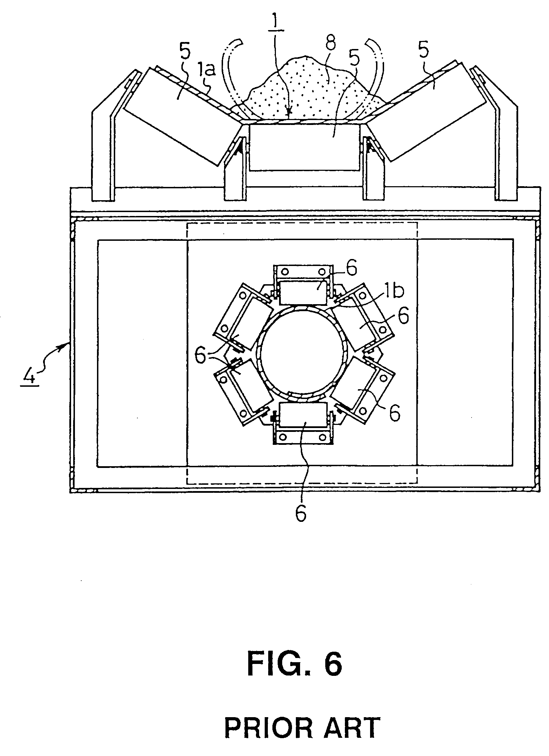

The conventional return pipe conveyers shown in Figs. 5 and 6 have an endless conveyer belt 1 supported between a front roller 2 and a rear roller 3. The front roller 2 or the rear roller 3 is rotated with a driving means (not shown), such as a motor, to circulate the conveyer belt 1 around the rollers 2, 3. Multiple support frames 4 are appropriately spaced (e.g., equally spaced or staggered) in the direction of motion of the conveyer belt 1 between the rollers 2, 3, and above each support frame 4, there are multiple support rollers 5 which support the belt 1 during a conveying trip 1a of the belt 1 in a flat or slightly curved shape, while multiple shape supporting rollers 6 at the bottom part of the support frames 4 form the belt 1 into a substantially rounded or pipe-like shape during the return trip 1b.

The conveyed object 8 is placed on the conveyer belt 1 from the supply hopper 7 during the conveying trip 1a, and then conveyed to the discharge hopper 9 where it is released.

Multiple shape supporting rollers 6 are used for the return trip 1b of the conveyer belt 1 in order to wrap the conveying side of the belt 1 inwardly into a pipe-like shape so that portions of the conveyed object 8 which may be stuck on the surface of the conveying side of the belt 1 do not fall out of the belt.

A similar device is disclosed in Unexamined Japanese Patent Application No. (Kokai) 59-149211.

In this conventional return pipe conveyer, the belt 1 has a tendency to remain deformed in the round, pipe-like shape during the conveying trip, as shown by the dotted lines in Fig. 6, so that the sides of the belt on the conveying trip do not contact, and thus are not guided by, the supporting rollers 5. This is undesirable as it causes the belt to run unsteadily during the conveying trip.

The object of the present invention is to supply a return pipe conveyer that eliminates the above-mentioned problems found in the conventional technology by suppressing the warping of the belt so as to supply smooth and stable action during the conveying trip.

### SUMMARY OF THE INVENTION

To achieve the above object, the present invention uses a return pipe conveyer having an endless conveyer belt supported in either a flat or curved shape by multiple support rollers each supported by a frame, the object to be conveyed being placed on top of the conveyer belt, which in the middle portion of the return trip generally uses shape supporting rollers supported on a frame causing the belt passing through to be rounded in a pipe-like shape, the sides of the belt during the conveying trip being pressed down by pressing units fixed to a support frame.

The pressing units should be mounted on the supporting frame so that the units can be adjusted in a generally vertical direction with respect to the surface of the belt, or mounted on a supporting frame in a manner where the mounting angle is adjustable about an axis parallel with the length of the belt.

The pressing units may include a pressing roller which rotates along the conveying side of the conveyer belt about an axis parallel with the axis of rotation of the support rollers, or they may include a support plate which moves slidably along the conveying side of the conveyer belt and which is supported by the support frame.

The conveyer belt that is wrapped into a tube or pipe-like shape during the return trip is pressed flat by pressing units in a generally vertical direction with respect to the surface of the belt as the belt enters the conveying trip, allowing the belt to move smoothly past the supporting rollers, and providing stable conveying movement.

### BRIEF DESCRIPTION OF THE DRAWINGS

The present invention is described in detail below with reference to the accompanying drawings, in which:
Fig. 1 is a vertical front view of a first embodiment of the invention;
Fig. 2 is a schematic side elevation view of the first embodiment of the invention;
Fig. 3 is an enlarged front view in section of a second embodiment of the invention;
Fig. 4 is an enlarged front view in section of a third embodiment of the invention;
Fig. 5 is a schematic side view of a conventional return pipe conveyer belt; and
Fig. 6 is an enlarged vertical front view taken along line 6-6 in Fig. 5.

### DETAILED DESCRIPTION OF THE PREFERRED EMBODIMENTS

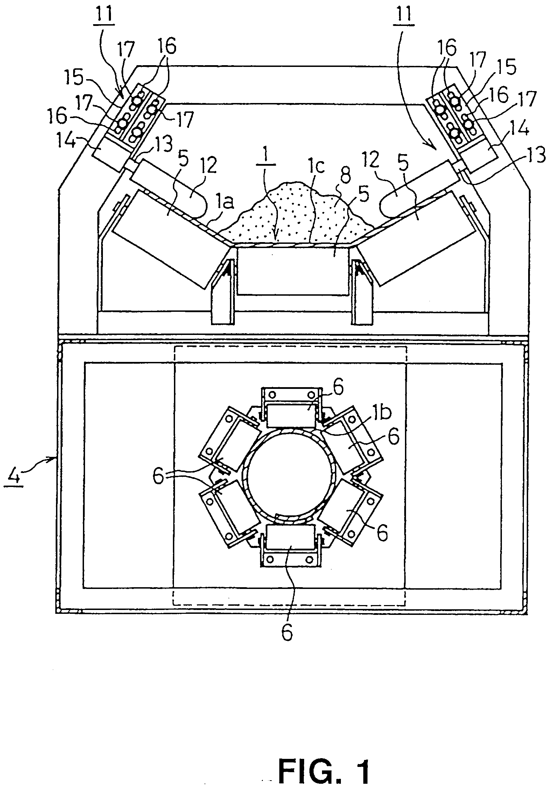

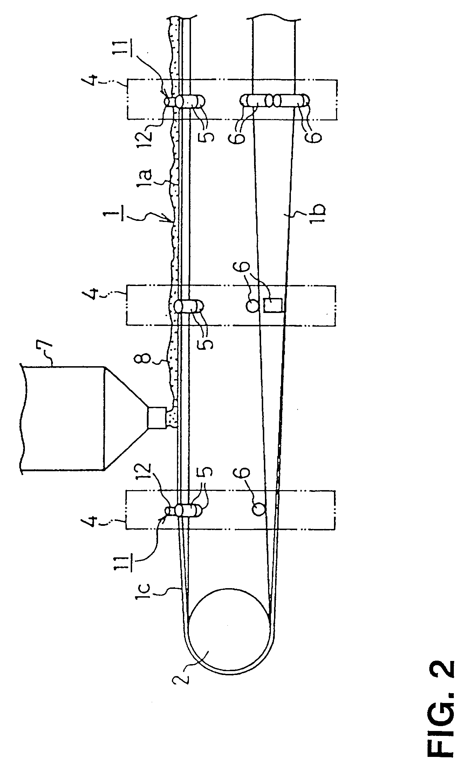

Figs. 1 and 2 show the first embodiment of the present invention. In the following descriptions of the embodiments, parts corresponding to the conventional return pipe conveyer shown in Figs. 5 and 6 are identified by the same reference numbers, and a detailed explanation of these parts is therefore omitted.

The first embodiment is shown in Fig. 1 where two pressing units 11 are mounted on the upper corners of one of the support frames 4 which is closest to the front roller 2, the support frame 4 surrounding the conveyer belt as it runs through the conveying trip 1a and the return trip 1b. The pressing units 11 press down on the sides of the conveyer belt 1 having a conveying surface 1c.

As shown in Fig. 2, the bearings 14 rotationally support pressing rollers 12 via members 13 along an axis which is parallel to an axis of the outermost support rollers 5. The bearings 14 are positioned at the bottom of brackets 15 which extend at right angles with respect to the axis of the outermost support rollers 5, and the brackets 15 are mounted on each upper corner of the support frame 4 by bolts 17 that are inserted through oblong holes 16 in each bracket 15. This allows the pressing rollers 12 to be adjusted in parallel with the axis of the support rollers 5 making it possible to press both sides of the conveyer belt 1 towards the support rollers 5.

According to the first embodiment, when the conveyer belt 1 (which is warped during the return trip 1b) enters the conveying side, the sides of the belt 1 are flattened by the pressing rollers 12 against the support rollers 5 allowing the belt 1 to uniformly contact the supporting rollers for a stable and smooth conveying trip 1a.

Also, according to the first embodiment, the mounting position of the bracket 15 can be moved toward and away from the surface of the conveyer belt 1 at the sides to accommodate conveyer belts 1 having different thicknesses.

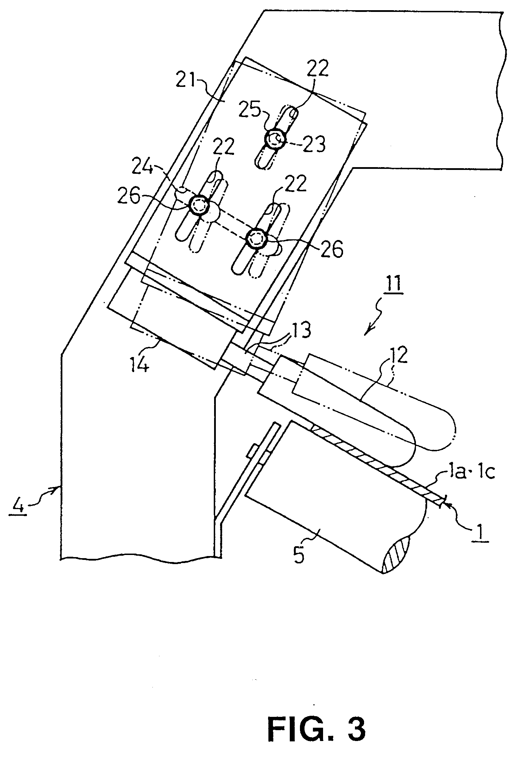

Fig. 3 shows a second embodiment of the present invention.

In the second embodiment shown in Fig. 3, the bearing 14 rotationally supports the pressing roller 12 via member 13, the pressing roller 12 being rotatable about an axis which is parallel to the axis of the adjacent support roller 5, as in the first embodiment. The bearing 14 is fixed to the bottom of a bracket 21, and three oblong holes 22 are formed in the bracket 21, one in the upper middle portion and two in the lower side portions. One round hole 23 and one horizontally oblong hole 24 are formed vertically apart from each other in the upper side portions on the support frame 4, and one bolt 25 is inserted through the top oblong hole 22 in the bracket 21 and the round hole 23 in the support frame 4. Further, two bolts 26 are inserted through the two side holes 22 in the bracket 21 and the horizontally oblong hole 24 on the supporting frame 4, and three nuts (not shown) corresponding to the three bolts 25, 26 are used to tightly secure the bracket 21 to the support frame 4.

According to this embodiment, by securing the three bolts 25, 26 with the nuts (not shown) and moving the bracket 21 vertically with respect to the surface of the conveying web 1, the position of bracket 21 and the pressing roller 12 can be adjusted to move toward and away from the surface of the conveying web, as in the first embodiment. Further, by moving the two lower bolts 26 along the horizontally oblong hole 24 in the support frame 4, the bracket 21 and the supported pressing roller 12 can be rotated about the top hole 23 and bolt 25, as shown by the solid and dotted lines in Fig. 3, so that the mounting angle of the bracket 21 and the pressing roller 12 is adjustable about an axis parallel to the length of conveyer belt. Thus, if the tilting angle of the outermost support roller 5 is slightly changed, the mounting angle of the bracket 21 and the pressing roller 12 can be adjusted to accommodate the change in the tilting angle of the support roller 5.

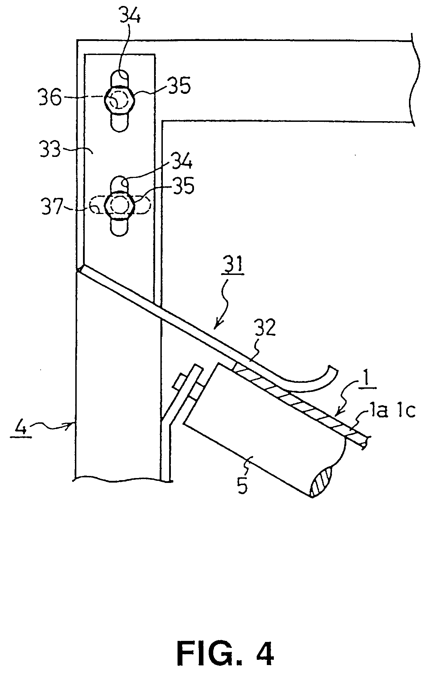

Fig. 4 shows a third embodiment of the present invention.

In the third embodiment shown in Fig. 4, a pressing unit 31 is supported by the support frame 4 and includes a pressing plate 32 which moves slidably along the sides 1a of the conveyer belt 1 adjacent the support rollers 5.

The pressing plate 32 is made of, for example, a synthetic resin with a low friction coefficient and may be a single unit including the bracket 33 which has a pair of vertically oblong holes 34 in the center. Two bolts 35 are inserted through each oblong hole 34 and then through a round hole 36 and a horizontal oblong hole 37, respectively, on the support frame 4. Nuts (not shown) are secured to each bolt 35, thereby fixing the bracket 33 and the pressing plate 32 to the support frame 4 so that the mounting position can be adjusted vertically, as well as at an angle about an axis parallel to the length of the conveyer belt 1. Thus, the third embodiment has the same advantages as the first and second embodiments.

The bracket of the third embodiment is very simple and easy to produce, and if the pressing plate 32 is made of an elastic material, the pressing plate 32 will press down on the conveyer belt 1 with an appropriate pressure. Further, if the conveyer belt 1 is warped, or if a portion of the conveyer belt having an object to be conveyed is stuck to the conveyer surface 1c, the pressing plate 32 will bend elastically to let the obstruction pass through, thereby preventing damage to the pressing plate 32, the conveyer belt 1, the supporting rollers 5, etc.

As shown above, according to the present invention, the rounded and warped portion of the conveyer belt caused during the return trip is pressed by a pressing unit mounted along the sides of the conveyer belt so that the edge portions of the belt uniformly contact the supporting rollers, thereby causing the belt to move in a stable and smooth manner during the conveying trip.

Thus, the present invention prevents warping and unstable running of the conventional belt caused when the edges of the belt remain deformed after the return trip.

## Claims

1. A return pipe conveyer comprising:
an endless conveyer belt (1) rotatably supported by at least two opposing rollers;
at least one frame (4);
support rollers (5) rotatably supported by said at least one frame (4) for supporting a portion of said belt (1) during a conveying trip (1a) of said belt;
shape supporting rollers (6) rotatably supported by said at least one frame (4) for rounding a portion of said belt in a substantially pipe-shaped cross section during a return trip (16) of said belt; and
pressing units (11) mounted on said at least one frame (4) for pressing opposite lateral sides of said belt (1) against said support rollers (5) during the conveying trip to suppress warping of said belt (1) caused by said shape supporting rollers (6) and to ensure smooth and stable movement of said belt on said support rollers (5).

2. A return pipe conveyer as recited in claim 1, further comprising means (15, 16, 17) for mounting said pressing units (11) on said at least one frame (4) so that a mounting position of said pressing units is adjustable in a direction towards and away from said belt (1).

3. A return pipe conveyer as recited in claim 1, further coprising means (24, 25, 26) for mounting said pressing units (11) on said at least one frame (4) so that an angle that said pressing units make with a surface of said belt (1) is adjustable.

4. A return pipe conveyer as recited in claim 3, wherein said pressing units (11) are rotatable about an axis substantially parallel with a length of said belt.

5. A return pipe conveyer as recited in claim 1, wherein said pressing units (11) comprise one or more pressing rollers (12) which rotate about an axis substantially parallel with an axis of rotation of said support rollers (5).

6. A return pipe conveyer as recited in claim 1, wherein said pressing units (11) comprise one or more pressing plates which move slidably along a surface of said belt.

7. A return pipe conveyer as recited in claim 2, wherein said means for mounting comprises a bracket (15) having an oblong hole (16).

8. A return pipe conveyer as recited in claim 3, wherein said means for mounting comprises a bracket (21) having at least a first hole and a second hole, and wherein said at least one frame (4) has a round hole (23) an an oblong hole (24), a first bolt (25) being inserted through, and secured in, the first hole and the round hole, said bracket (21) being rotatable about said first bolt (25), a second bolt (26) being inserted through, and secured in, the second hole and the oblong hole, so that an angle of said bracket (21) about said first bolt is adjustable.

9. A return pipe conveyer comprising an endless conveyer belt (1) supported between at least two opposing rollers, support rollers (5) for supporting said belt (1) and an object (8) to be conveyed during a conveying trip (1a) of said belt (1), shape supporting rollers (6) for rounding said belt (1) into a substantially pipe-shaped cross section during a return trip (1b) of said belt, and means for suppressing warping of lateral edges of said belt (1) to ensure smooth and stable movement of said belt (1) during the conveying trip (1a).

10. A return pipe conveyer as recited in claim 9, further comprising means (15, 16, 17) for mounting said suppressing means (11) so that a mounting position of said suppressing means (11) is adjustable in a direction towards and away from said belt (1).

11. A return pipe conveyer as recited in claim 9, further comprsing means (24, 25, 26) for mounting said suppressing means (11) so that an angle that said suppressing means (11) makes with a surface of said belt (1) is adjustable.

12. A return pipe conveyer as recited in claim 11, wherein said suppressing means (11) is rotatable about an axis substantially parallel with a length of said belt (1).

13. A return pipe conveyer as recited in claim 9, wherein said suppressing means (11) comprises one or more pressing rollers (12) which rotate about an axis substantially parallel with an axis of rotation of said support rollers (5).

14. A return pipe conveyer as recited in claim 9, wherein said suppressing means (31) comprises one or more pressing plates (32) which move slidably along a surface of said belt (1).

15. A return pipe conveyer as recited in claim 10, wherein said mounting means (31) comprises a bracket (33) having an oblong hole (34).

16. A return pipe conveyer as recited in claim 11, wherein said mounting means (31) comprises a bracket (34) having at least a first hole and a second hole, and wherein a frame (4) of the return pipe conveyer is provided with a round hole (36) and an oblong hole (37), a first bolt (35) being inserted through, and secured in, the first hole and the round hole, said bracket (33) being rotatable about said first bolt (35), a second bolt (35) being inserted through, and secured in, the second hole and the oblong hole, so that an angle of said bracket (3) about said first bolt (35) is adjustable.
